## Europäisches Patentamt
## European Patent Office
## Office européen des brevets

(19)

(11) Publication number: **0 036 287**
**B1**

(12) **EUROPEAN PATENT SPECIFICATION**

(45) Date of publication of patent specification: **25.07.84**

(21) Application number: **81301004.8**

(22) Date of filing: **10.03.81**

(51) Int. Cl.³: **A 62 C 31/02,
A 62 C 31/24, B 05 B 15/06**

(54) **Liquid-projecting monitor.**

(30) Priority: **13.03.80 GB 8008524**

(43) Date of publication of application:
**23.09.81 Bulletin 81/38**

(45) Publication of the grant of the patent:
**25.07.84 Bulletin 84/30**

(84) Designated Contracting States:
**AT DE FR IT NL**

(56) References cited:
**DE - A - 2 059 536**
**DE - B - 1 559 624**
**DE - U - 1 851 099**
**FR - A - 1 008 630**
**US - A - 1 674 693**
**US - A - 2 111 553**
**US - A - 3 612 408**

(73) Proprietor: **Chubb Fire Security Limited
Pyrene House
Sunbury-on-Thames Middlesex TW16 7AR (GB)**

(72) Inventor: **Evans, John Lawrence
38 Lambert Crescent Blackwater
Camberley Surrey (GB)**
Inventor: **Bains, Kuldip
85 Paxton Avenue
Slough Berkshire (GB)**

(74) Representative: **Obee, Robert William et al,
Manor House Manor Lane
Feltham Middlesex TW13 4JQ (GB)**

Courier Press, Leamington Spa, England.

## Description

The present invention relates to liquid-projecting devices and is concerned especially with fire fighting devices of the type commonly referred to as cannons, monitors or turrets, (hereinafter referred to collectively as "monitors"), which are used for directing jets of water or foam at a fire. Typically, a monitor comprises a nozzle borne by a mechanism which permits the orientation of the nozzle to be adjusted by pivotal movements about two orthogonal axes—a generally vertical axis about which the nozzle can be pivoted to traverse its jet from side to side, and a generally horizontal axis about which the nozzle can be pivoted to adjust its angular elevation or depression. Such devices may be embodied as portable freestanding units to be set up as required at the scene of a fire, or may be mounted on trailers or self-propelled fire fighting vehicles, or may be used in fixed installations at tanker jetties, oil refineries or other fire risk areas. Although primarily concerned with the field of fire fighting, monitors in accordance with the invention may nevertheless find application in other fields of use, e.g. in certain forms of mining and industrial washing processes, and generally where there is a need to control the direction through space of relatively high pressure, high flowrate jets of water or other liquids.

The type of monitor with which the invention is more particularly concerned is that which will be hereinafter referred to as a 'spherical head monitor'. By that is meant a monitor in which the nozzle is carried by a hollow member (the 'head') which has an external surface defining a frustosphere sealing against a housing which defines together with the head a chamber from which the liquid is led into a passage defined within the head and thence to the nozzle. The head is borne for pivotal movement relative to the housing about a generally horizontal axis so as to provide adjustment of the angular elevation or depression of the nozzle, throughout the permitted range of such movement the frusto-spherical surface of the head forming a sliding seal against the housing to maintain the aforesaid chamber liquid-tight. The assembly of head and housing may also be borne for pivotal movement as a whole about a generally vertical axis, thereby to traverse the jet which issues from the nozzle from side to side.

A spherical head monitor is known e.g. from DE—B—1559624. In that specification the head is borne by a housing the internal surface of which is itself frusto-spherical and complementary to the frusto-spherical surface of the head so that the head and housing have a ball-and-socket relationship, although pivotal movement of the head relative to the housing is limited to a single (horizontal) axis by appropriate bearings. The housing is carried at the end of an elbow duct which can be pivoted about a vertical axis for traverse adjustment of the liquid jet. By virtue of the ball and socket relationship between the head and housing the margins of the inlet to the head passage lie closely adjacent to the internal surface of the housing and, in order to provide sufficient rate of flow of liquid from the elbow duct into the head passage at different angular positions of the head relative to the housing, the inlet portion of the passage through the head is widened, in the direction perpendicular to the pivot axis of the head, as compared with the downstream portion of that passage and with the bore of the elbow duct. There is, therefore, a sudden increase and then decrease in the flowpath cross-section in passing from the elbow duct into the head. A further drawback of the monitor disclosed in DE—B—1559624 is that the sealing means provided on the housing for cooperation with the frusto-spherical surface of the head must be located in front of the pivot axis of the head relative to the housing (i.e. downstream of that axis in the sense of liquid flow through the head). This is necessary in order to accommodate the pivot angle of the head bearing in mind that the upper and lower margins of the head passage inlet are flared apart as mentioned above. A consequence of this seal location is that the housing must be split into two parts to enable the head to be assembled into the housing. This seal location is also disadvantageous when considered in relation to the effects of the dynamic and hydraulic forces acting on the monitor. That is to say the reaction force of the liquid jet emerging from the head nozzle tends to press the head rearwardly away from contact with the seal while the static pressure in the chamber behind the head presses the seal forwards, again in the direction which is away from contact with the head.

Another such monitor is shown in DE—A—2059536. This also has a flared (circular) inlet to the passage through its head but in this case the diameter of the head passage is relatively small in comparison with the diameter of the frusto-sphere so that the margins of the inlet remain spaced from the internal surface of the housing over a range of elevation angles. A disadvantage of this ratio of head-to-passage diameters is, however, that only a small proportion of the cross-sectional area of the head is occupied by the passage so that for the monitor to handle a high volumetric flow rate of liquid an unduly large and heavy head and associated structure is required. In common with DE—B—1559624 the housing/head seal is located in front of the head's pivot axis, with corresponding disadvantages as discussed above.

It is an aim of the present invention to provide a spherical head monitor of desirably compact form, where the sealing problems discussed above can be overcome, and where pressure losses in the liquid stream passing through the head can be minimised by minimising changes in the cross-sectional area of the head passage. The latter object is recognised in DE—B—1559624 but cannot be fully achieved due to the selected geometrical relationship between the head and housing in the prior device.

The present invention accordingly provides a spherical head monitor where the cross-sectional area of the chamber immediately upstream of the inlet of the head passage is greater than the cross-sectional area of said inlet, and throughout at least a major part of the range of pivotal movement of the head relative to the housing both the upper and lower margins of said inlet remain spaced from the internal surface of the housing; characterised in that the portion of the housing which seals against the frusto-spherical surface of the head lies in a plane which is spaced upstream from the axis about which the head pivots relative to the housing; the inlet of said passage is of elongate cross-section with the longer cross-sectional dimension thereof parallel with said axis; and the head is so configured that the cross-sectional area of the passage within the head which is available for liquid flow is at least approximately constant throughout the length of said passage which is encompassed by said frusto-sphere.

Preferably, the ratio of the diametral cross-sectional area of the aforesaid frusto-sphere to the mean cross-sectional area available for liquid flow within the length of said passage which is encompassed by said frusto-sphere is approximately 4:1.

These and other features of the present invention will now be more particularly described, by way of example, with reference to the accompanying drawings, in which:

Figure 1 is an elevation of a first embodiment of a spherical head monitor according to the invention;

Figure 2 is a vertical section through the monitor of Figure 1;

Figure 3 shows the head of Figure 2 to an enlarged scale;

Figure 4 is a section on the line IV—IV of the head of Figure 3, showing also part of the adjacent housing;

Figure 5 is a view in the direction of arrow A of the head of Figure 3;

Figure 6 is a view in the direction of arrow B of the head of Figure 3;

Figure 7 shows the vertical bearing axle of Figure 2 to an enlarged scale;

Figure 8 is an elevation of the axle of Figure 7;

Figure 9 is a plan view of the axle of Figure 7; and

Figure 10 is an elevation of a second embodiment of a spherical head monitor according to the invention.

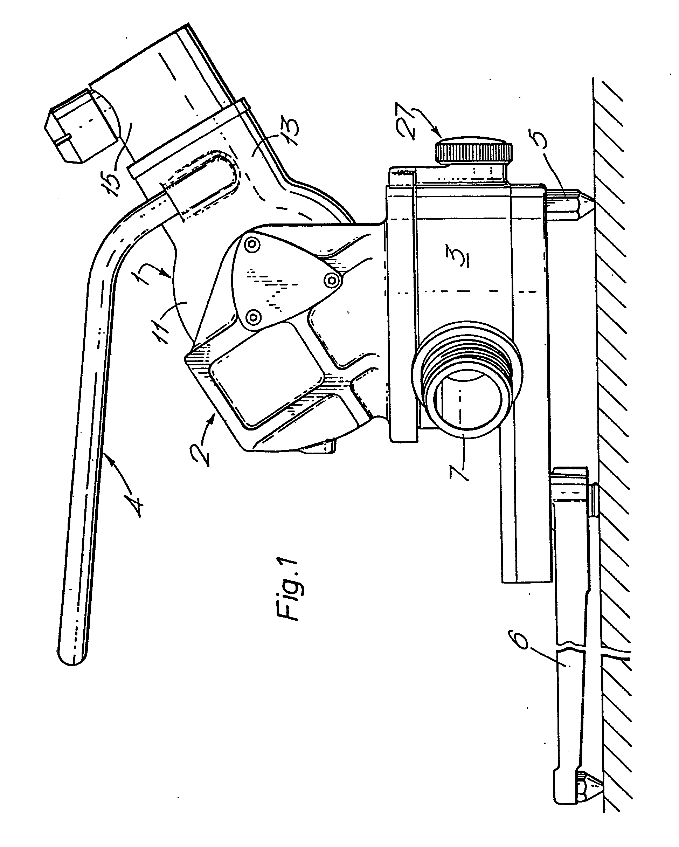

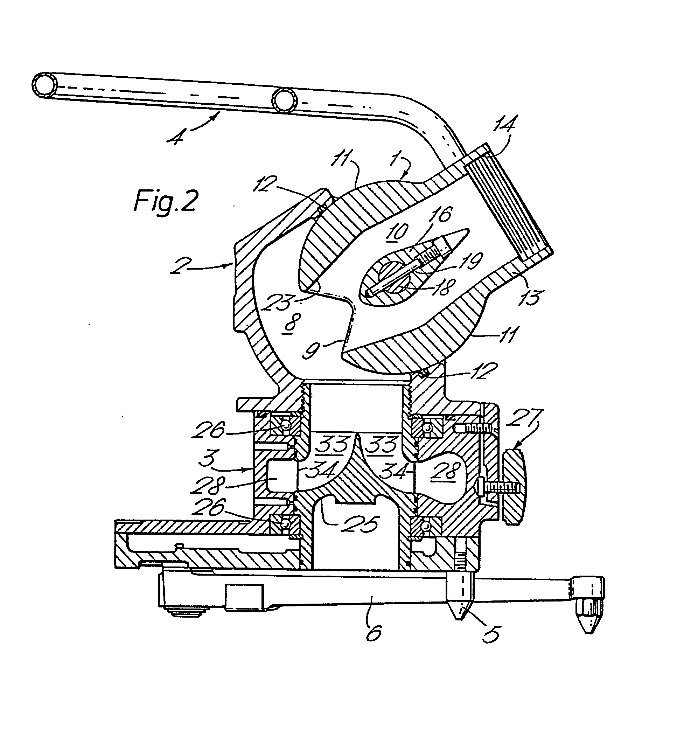

Referring to Figures 1 and 2, there is shown a portable, ground-standing spherical head monitor in accordance with the invention, its head 1 being pivoted about a horizontal axis in a housing 2, and the assembly of head 1 and housing 2 being pivoted about a vertical axis in the body 3, all as more fully described hereinafter. A handle bar 4 is attached to the head 1 in order to facilitate manual adjustment of its orientation. The monitor has a fixed front foot 5 and a pair of rear legs 6 which can be swung out from a stowed position beneath the body 3 (Figure 2) to their operative, stabilising positions (Figure 1) when the monitor is set up for use. Inlet couplings 7 for water hoses are provided to each side of the body 3, water supplied to these inlets being lead through the body and housing 2 to the head 1 as will be more fully described hereinafter.

Referring now more particularly to Figure 2, the head 1 and housing 2 define together a chamber 8 from which water is lead through an inlet 9 in the rear of the head to a passage 10 extending through the head. The head has a frusto-spherical external surface 11 which forms a sliding seal against an O-ring 12 held in the housing 2, to keep the chamber 8 watertight throughout the permitted range of pivotal movement of the head relative to the housing. From the spherical portion of the head there extends a short barrel portion 13 terminating in a threaded socket 14 to which may be coupled a water nozzle or foam branch pipe or an adaptor therefor (e.g. as indicated at 15 in Figure 1).

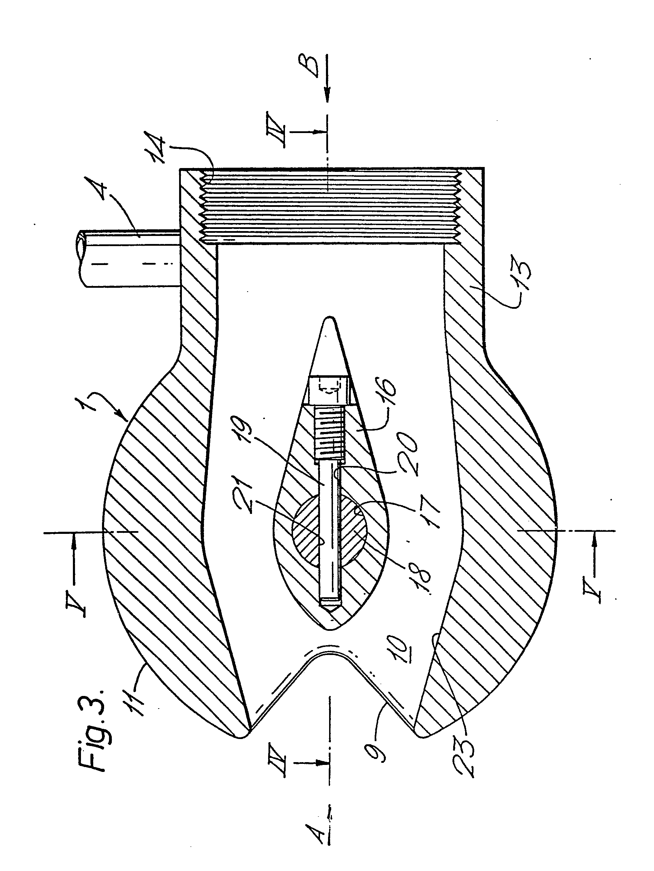

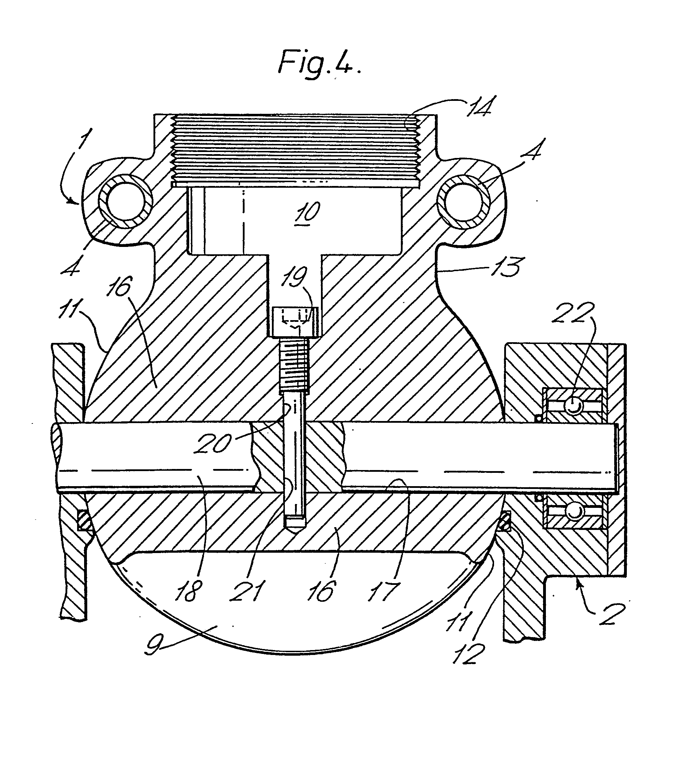

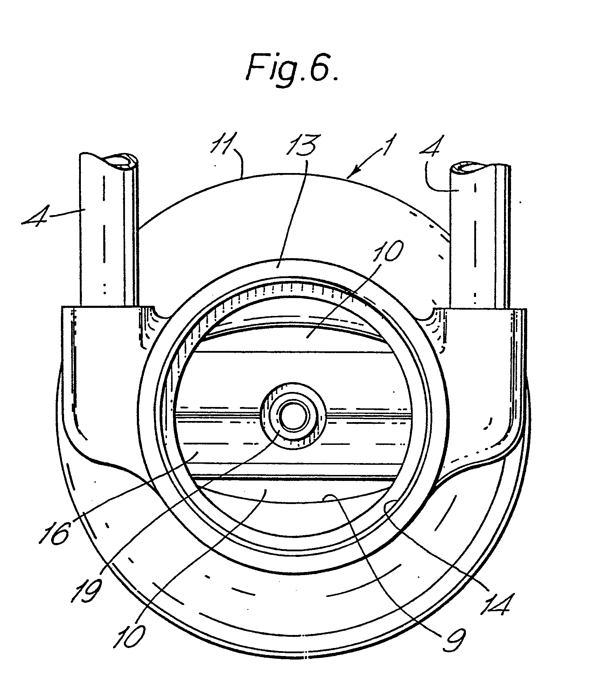

The internal form of the head 1 appears from Figures 3—6. An integral centre body 16 extends transversely across the interior of the head, the head and centre body being formed from a single casting e.g. in aluminium alloy. A bore 17 is formed in the centre body, its axis passing through the geometrical centre of the frusto-spherical surface 11 of the head, and an axle 18 passes through the bore 17, the head being fastened on the axle by means of a pin 19 passing through aligned bores 20 and 21 in the centre body and axle. The axle 18 is mounted at each end in bearings 22 in the housing 2 (Figure 4), thereby to provide the pivotal movement for angular elevation and depression of the head. At one end of the axle there will be provided a hand-operated clutch arrangement (not shown) whereby the axle can be selectively locked to the housing with the head in a set angular orientation.

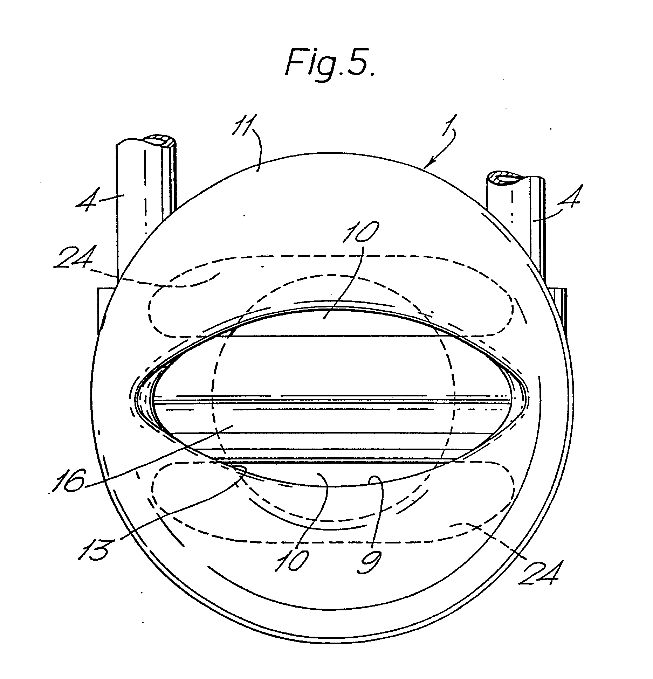

As shown particularly in Figure 3, the centre body 16 is shaped as a streamlined foil pointing upstream in the sense of water flow through the head, and acts to guide the water smoothly past the obstruction represented by the transverse axle 18. It defines together with the internal surface 23 of the head a passage 10 of which the cross-sectional area available for water flow is approximately constant throughout its length and which involves no abrupt changes in either direction or form. The form of surface 23 blends smoothly from an elliptical section at the inlet 9 to a circular section at the barrel portion 13. The cross-sectional form of the passage 10 as viewed on the line V—V of Figure 3 is indicated at 24 in Figure 5.

Returning now to Figure 2, the housing 2 together with the head 1 is fastened to the top end of a vertical axle 25. This axle is mounted in bearings 26 in the body 3 for 360° rotation, thereby to provide unlimited traverse adjustment for the head. A hand-operated brake mechanism is provided at 27 whereby the housing 2 can be selectively locked to the body 3 with the head in a set traverse position.

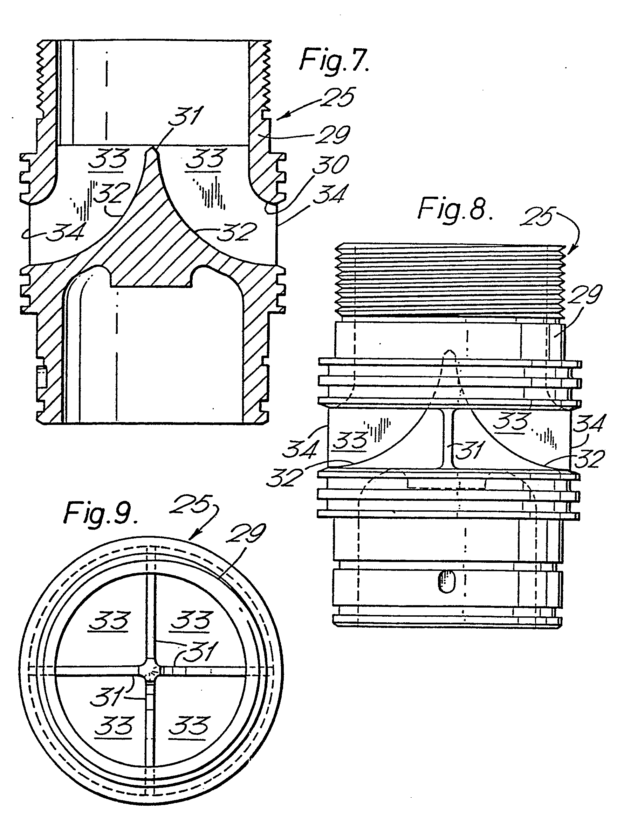

The axle 25 acts not only as a bearing member for the head but also to lead water to the chamber 8 from an annular chamber 28 formed in the body 3 and connected with the water inlets 7. The form of the axle is more clearly shown in Figures 7—9. It comprises an upper tubular portion 29 with a radiused edge at 30 and within which are provided four integral septa 31 and intervening profiled surfaces 32. In practice all these parts are formed from a single casting e.g. in aluminium alloy. The resultant structure defines four sectoral channels 33 leading upwardly along arcuate paths from respective inlet apertures 34 defined beneath the tubular portion 29 and between the septa 31. As will be appreciated from Figure 2 the apertures 34 communicate with the surrounding chamber 28, and they will remain in communication with that chamber irrespective of the relative rotational position of the axle 25 in the body 3. Water from chamber 28 is thus lead smoothly upwards through a 90° angle in four separate streams by the channels 33, to unite in the top end of the axle and thence pass into the chamber 8.

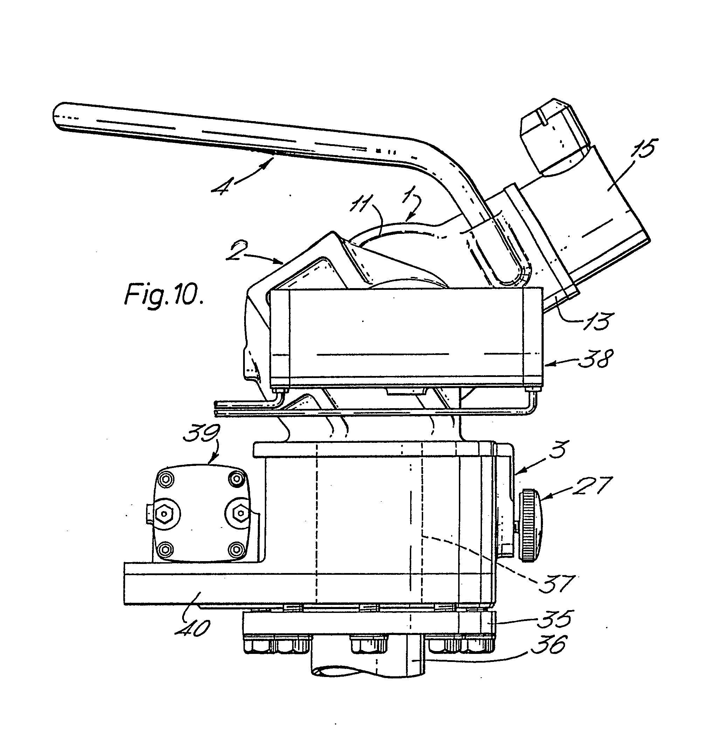

Figure 10 illustrates a similar type of monitor to that described above, like reference numerals being used to denote like parts, but in this case the monitor is adapted for remote as well as manual operation. The illustrated embodiment is shown mounted on a pedestal 35 and supplied with water from beneath by an inlet pipe 36. In this case therefore the side inlets 7 and chamber 28 described above are dispensed with and the pipe 36 leads sealingly into a plain tubular axle 37 in place of the axle 25 described above. In addition two double-acting hydraulic actuators 38 and 39 are provided, to which the supplies of working fluid can be controlled remotely. Each actuator comprises a double-acting piston driving a sector gear so as to provide a rotary displacement output in dependence upon the differential pressure applied across the piston. The actuator 38 drives an extension of the axle 18 by which the head 1 of the monitor is pivoted in the housing 2, thereby to achieve remote adjustment of the orientation of the head in elevation and depression; and the actuator 39 drives the axle 37 via a ring gear located in the lower portion 40 of the body 3, thereby to achieve remote traverse adjustments for the head.

By way of example, a portable, ground-standing fire fighting monitor substantially as shown in Figures 1 to 9 has been constructed with an outlet (14) diameter of 3 inches (76 mm) and is capable of handling water flows of up to 1600 litres/minute at an operating pressure of 20.5 bar. The pedestal-mounted version of Figure 10, with the same diameter outlet, can handle flows of up to 2270 litres/minute at the same operating pressure.

## Claims

1. A liquid-projecting monitor comprising a nozzle-carrying head (1) which has an external surface defining a frusto-sphere (11) sealing against a housing (2), the housing (2) defining together with the head (1) a chamber (8) from which liquid is led into a passage (10) defined within the head and thence to the nozzle, the head (1) being borne for pivotal movement relative to the housing (2) about a generally horizontal axis so as to provide adjustment of the angular elevation or depression of the nozzle and the frusto-spherical surface (11) of the head forming a sliding seal against the housing (12) to maintain the aforesaid chamber (8) liquid-tight throughout the permitted range of said pivotal movement; the cross-sectional area of said chamber (8) immediately upstream of the inlet (9) to said passage (10) being greater than the cross-sectional area of said inlet (9), and throughout at least a major part of the range of pivotal movement of the head (1) relative to the housing (2) both the upper and lower margins of said inlet (9) remaining spaced from the internal surface of the housing (2); characterised in that the portion (12) of the housing (2) which seals against the frusto-spherical surface (11) of the head (1) lies in a plane which is spaced upstream from the axis (18) about which the head (1) pivots relative to the housing (2); the inlet (9) of said passage (10) is of elongate cross-section with the longer cross-sectional dimension thereof parallel with said axis (18); and the head (1) is so configured that the cross-sectional area of said passage (10) within the head which is available for liquid flow is at least approximately constant throughout the length of said passage which is encompassed by said frusto-sphere (11).

2. A monitor according to claim 1 wherein the ratio of the diametral cross-sectional area of said frusto-sphere (11) to the mean cross-sectional area available for liquid flow within the length of said passage (10) which is encompassed by said frusto-sphere (11) is approximately 4:1.

3. A monitor according to any preceding claim wherein said chamber (8) is fed with liquid from below through a generally vertical duct (25) the projected cross-sectional area of which intersects the head (1).

4. A monitor according to any preceding claim wherein the head (1) is borne relative to the housing (2) by means of an axle (18) passing transversely through the width of the head and there is provided a body (16) extending transversely across the interior of the head to enclose said axle and to define in part the confines of said passage (10).

5. A monitor according to any preceding claim wherein the inlet (9) of said passage (10) is of generally elliptical cross-section.

6. A monitor according to any preceding claim wherein the assembly of said head (1) and housing (2) is pivotal as a whole about a generally vertical axis, being borne in this respect by a hollow, generally vertical axle (25) which turns together with said assembly (1, 2) and through which liquid is led into said chamber (8); said generally vertical axle (25) being surrounded by an annular feed chamber (28) and having inlet apertures (34) through its wall in communication with said feed chamber (28).

7. A monitor according to claim 6 wherein said generally vertical axle (25) is configured internally to define a circumferentially arrayed series of arcuately extending channels (33) to lead separate streams of liquid smoothly from respective inlet apertures (34) to the upper portion of the axle (25).

**Revendications**

1. Une lance de projection de liquid comprenant une tête (1) portant une buse et qui a une surface externe définissant une obturation en tronc de sphère (11) contre un logement (2), le logement (2) définissant avec la tête (1) une chambre (8) à partir de laquelle du liquid est mené dans un passage (10) défini dans la tête et ensuite à la buse, la tête (1) étant supportée de manière à permettre un mouvement pivotant par rapport au logement (2) autour d'un axe généralement horizontal afin d'assurer le réglage de l'angle de site positif ou négatif de la buse et la surface (11) en tronc de sphère de la tête formant un joint d'étanchéité coulissant contre le logement (12) afin de maintenir la chambre précitée (8) étanche qu liquide sur toute la plage permise dudit mouvement pivotant, l'aire de section de ladite chambre 8 immédiatement en amont de l'entrée (9) vers ledit passage (10) étant supérieure à l'aire de la section de ladite entrée (9), et sur au moins une majeur partie de la plage de mouvement pivotant de la tête (1) par rapport au logement (2), les bords supérieure et inférieur de ladite entrée (9) restant tous deux espacés de la surface interne du logement (2), caractérisée en ce que la partie (12) du logement (2) qui assure l'étanchéité contre la surface en tronc de sphère (11) de la tête (1) s'étend dans un plan qui est espacé en amont de l'axe (18) autour duquel la tête (1) pivote par rapport au logement (2), l'entrée (9) dudit passage (10) est de section allongée avec la dimension de section la plus grande parallèle audit axe (18), et la tête (1) est ainsi conformée que l'aire de la section dudit passage (10) à l'intérieur de la tête et qui est disponible pour l'écoulement du liquide est au moins approximativement constante sur toute la longueur dudit passage qui est entourée par lediate tronc de sphère (11).

2. Une lance selon la revendication 1, dans laquelle le rapport de l'aire de section diamétrale dudit tronc de sphère (11) à l'aire de section moyenne disponible pour l'écoulement de liquide dans la longueur dudit passage (10) qui est entourée par ledit tronc de sphère (11) est approximativement de 4/1.

3. Une lance selon l'une quelconque des revendications précédentes, dans laquelle ladite chambre (8) est alimentée en liquide provenant de dessous au-travers d'un conduit généralement vertical (25) dont l'aire de section projetée coupe la tête (1).

4. Une lance selon l'une quelconque des revendications précédentes dans laquelle la tête (1) est supportée par rapport au logement (2) au moyen d'un axe (18) passage transversalement sur la largeur de la tête et il est prévu un corps (16) s'étendant transversalement au travers de l'intérieur de la tête afin de renfermer ledit axe et de définir en partie les contours dudit passage (10).

5. Une lance selon l'une quelconque des revendications précédentes, dans laquelle l'entrée (9) dudit passage (10) est d'une section généralement elliptique.

6. Une lance selon l'une quelconque des revendications précédentes dans laquelle l'ensemble de ladite tête (1) et du logement (2) est monté selon un mouvement pivotant d'ensemble autour d'un axe généralement vertical, en étant supporté à cet effet par un axe creux (25) généralement verticale qui tourne avec ledit ensemble (1, 2) et au travers duquel du liquide est conduit dans ladite chambre (8), ledit axe (25) généralement vertical étant entouré par une chambre d'alimentation annulaire (28) et ayant des ouvertures d'entrée (34) au travers de sa paroi et en communication avec ladite chambre d'alimentation (28).

7. Une lance selon la revendication 6, dans laquelle ledit axe (25) généralement vertical est intérieurement conformé afin de délimiter une série arrangée circonférentiellement de canaux (33) courbés en forme d'arc afin de diriger régulièrement des écoulements séparés de liquide depuis des ouvertures d'entrée respectives (34) jusqu'à la partie supérieure de l'axe (25).

**Patentansprüche**

1. Flüssigkeitsabstrahlender Monitor, bestehend aus einem Düsen tragenden Kopf (1), der eine äußere Oberfläche aufweise, die eine kugelstumpfförmige Dichtung (11) gegenüber einem Gehäuse (2) definiert, das Gehäuse (2) zusammen mit dem Kopf (1) eine Kammer (8) definiert, von welcher Flüssigkeit in einem innerhalb des Kopfes gebildeten Durchlaß (10) und damit zur Düse geleitet wird, der Kopf (1) getragen wird für eine Schwenkbewegung relativ zum Gehäuse (2) um eine im wesentlichen horizontale Achse, damit sich eine Einstellung der winkelmäßigen Anhebung oder Absenkung der Düse ergibt und die kugelstumpfförmige Oberfläche (11) des Kopfes eine Gleitdichtung gegenüber dem Gehäuse (12) bildet, um die vorerwähnte Kammer (8) über den erlaubten Bereich der Schwenkbewegung flüssigkeitsdicht zu halten, wobei die Querschnittsfläche der Kammer (8) unmittelbar stromaufwärts vom Einlaß (9) dieses Durchlasses (10) größer ist als die Querschnittsfläche dieses Einlasses (9) und wobei über mindestens einen Hauptteil des Bereichs der Schwenkbewegung des Kopfes (1) relativ zum Gehäuse (2) sowohl die oberen als auch die unteren Ränder dieses Einlasses (9) im Abstand zur inneren Oberfläche des Gehäuses (2) verbleiben, dadurch gekennzeichnet, daß der Teil (12) des Gehäuses (2), der gegen die kegelstumpfförmige Oberfläche (11) des Kopfes (1) abdichtet, in einer Ebene liegt, welche stromaufwärts im Abstand zur Achse (18) liegt, um welche der Kopf (1) relativ zum Gehäuse (2) dreht, der Einlaß (9) dieses Durchlasses (10) von länglichem Querschnitt ist, bei welchem die größere Querschnittsabmessung parallel zu dieser Achse (18) verläuft und der Kopf (1) so ausgebildet ist, daß die Querschnittsfläche dieses Durchlasses (10) innerhalb des Kopfes, die für den Flüssigkeitsdurchfluß zur Verfügung steht, über die Länge des Durchlasses, der von diesem Kegelstumpf (11) umgebene ist, mindestens näherungsweise konstant ist.

2. Monitor nach Anspruch 1, bei welchem das Verhältnis der diametralen Querschnittsfläche des Kugelstumpfes (11) zur mittleren Querschnittsfläche, welche innerhalb der Länge des Durchlasses (10), der von dem Kugelstumpf (11) umgeben ist, für den Flüssigkeitsdurchfluß zur Verfügung steht, näherungsweise 4:1 ist.

3. Monitor nach einem der vorhergehenden Ansprüche, bei welchem der Kammer (8) von unten durch eine im wesentlichen vertikale Leitung (25), deren vorspringende Querschnittsfläche den Kopf (1) schneidet, Flüssigkeit zugeführt wird.

4. Monitor nach einem der vorhergehenden Ansprüche, bei welchem der Kopf (1) relativ zum Gehäuse (2) mittels einer Achse (18) getragen wird, welche quer durch die Breite des Kopfes hindurchgeht, und wobei ein Körper (16) vorgesehen ist, welcher sich quer über das Innere des Kopfes erstreckt, um diese Achse zu umschließen und um teilweise die Begrenzung dieses Durchlasses (10) zu definieren.

5. Monitor nach einem der vorhergehenden Ansprüche, bei welchem der Einlaß (9) dieses Durchlasses (10) von im wesentlichen elliptischem Querschnitt ist.

6. Monitor nach einem der vorhergehenden Ansprüche, bei welchem die aus Kopf (1) und Gehäuse (2) bestehende Einheit als Ganzes um eine im wesentlichen vertikale Achse drehbar ist, diese Einheit diesbezüglich von einer hohlen, im wesentlichen vertikalen Achse (25) getragen wird, welche sich zusammen mit der Einheit (1, 2) dreht und durch welche Flüssigkeit in diese Kammer (8) geleitet wird, diese im wesentlichen vertikale Achse (25) umgeben ist durch eine ringförmige Zuflußkammer (28) und in ihrer Wandung Einlaßöffnungen (38) aufweist, welche in Verbindung stehen mit dieser Zuflußkammer (28).

7. Monitor nach Anspruch 6, bei welchem diese im wesentlichen vertikale Achse (28) im Inneren so ausgebildet ist, um in Umfangsrichtung eine Serie von gekrümmt sich erstreckenden Kanälen (33) zu definieren, um getrennte Flüssigkeitsströmungen gleichmäßig von den entsprechenden Einlaßöffnungen (34) zum oberen Teil der Achse (25) zu leiten.

Fig.1

Fig.2

Fig.3.

3

# Fig.4.

# Fig.5.

# Fig.6.

Fig.7.

Fig.8.

Fig.9.

Fig.10.